# EUROPÄISCHE PATENTSCHRIFT

(11) **EP 3 480 667 B1**
(45) Veröffentlichungstag und Bekanntmachung des Hinweises auf die Patenterteilung: **05.10.2022**
(21) Anmeldenummer: 17200401.2
(22) Anmeldetag: 07.11.2017
(51) Int. Cl.: H04L 9/40, G05B 15/00, G05B 19/042

(54) **KABELVERARBEITUNGSMASCHINENSTEUERUNGSSYSTEM, KABELVERARBEITUNGSMASCHINENSYSTEM UND VERFAHREN ZUM ÜBERWACHEN UND STEUERN VON KABELVERARBEITUNGSMASCHINEN**
CABLE PROCESSING MACHINE CONTROL SYSTEM, CABLE PROCESSING MACHINE SYSTEM AND METHOD FOR MONITORING AND CONTROLLING CABLE PROCESSING MACHINES
SYSTÈME DE COMMANDE DE MACHINES DE TRAITEMENT DES CÂBLES, SYSTÈME DE MACHINES DE TRAITEMENT DES CÂBLES ET PROCÉDÉ DE SURVEILLANCE ET DE COMMANDE DE MACHINES DE TRAITEMENT DES CÂBLES

(43) Veröffentlichungstag der Anmeldung: 08.05.2019
(73) Patentinhaber: KOMAX HOLDING AG, 6036 Dierikon (CH)
(72) Erfinder: EMMENEGGER, Daniel, 6047 Kastanienbaum (CH); ARPAGAUS, Beat, 6386 Wolfenschiessen (CH)
(74) Vertreter: Inventio AG

(56) Entgegenhaltungen:
- EP-A1- 2 913 961
- EP-A1- 3 067 769
- US-A1- 2012 239 221

## Beschreibung

Die vorliegende Erfindung betrifft ein Kabelverarbeitungsmaschinensteuerungssystem, ein Kabelverarbeitungsmaschinensystem und ein Verfahren zum Überwachen und Steuern von Kabelverarbeitungsmaschinen.

Bei Kabelverarbeitungsmaschinen werden eine Vielzahl von Aktuatoren gesteuert und/oder Daten von Sensoren erfasst. Auch Eingaben eines Bedieners in die Kabelverarbeitungsmaschine werden erfasst. Diese Daten stehen oft nur an der jeweiligen Kabelverarbeitungsmaschine, z.B. auf einem Monitor der Kabelverarbeitungsmaschine, zur Verfügung. Ein Bediener bzw. Benutzer des Kabelverarbeitungsmaschinensystems ist üblicherweise für eine Vielzahl von Kabelverarbeitungsmaschinen zuständig. Der Bediener bzw. Benutzer überwacht die ihm zugeordneten bzw. zugewiesenen Kabelverarbeitungsmaschinen und wechselt Kabelverarbeitungswerkzeuge gegebenenfalls aus und/oder wechselt Material, das von der Kabelverarbeitungsmaschine verarbeitet wird, aus bzw. füllt Material, das von der Kabelverarbeitungsmaschine verarbeitet wird, nach.

Der Bediener darf oftmals nur bestimmte Fehlermeldungen der Kabelverarbeitungsmaschinen, d.h. nicht alle Fehlermeldungen der Kabelverarbeitungsmaschinen, quittieren bzw. akzeptieren bzw. übergehen. Gewisse Fehlermeldungen darf nur ein Supervisor, der z.B. mehrere Bediener überwacht bzw. in der Hierarchie unter sich hat, da der Supervisor mehr Erfahrung bzw. Wissen bzw. mehr Ausbildung hat, welche Fehlermeldungen der (jeweiligen) Kabelverarbeitungsmaschine ignoriert werden können und welche Fehlermeldungen nicht ignoriert werden dürfen. Wenn nun ein Bediener eine Fehlermeldung an einer der ihm zugeordneten Kabelverarbeitungsmaschinen feststellt, muss der Bediener den für ihn zuständigen Supervisor (den er eventuell nicht kennt) suchen, ihn über den Fehler, die betreffende Kabelverarbeitungsmaschine und den an der betreffenden Kabelverarbeitungsmaschine stattfinden Kabelverarbeitungsprozess informieren und der Supervisor muss sich anschließend zur Kabelverarbeitungsmaschine bewegen, um den Fehler zu quittieren bzw. zu akzeptieren.

Dies ist äußert zeitaufwendig und der Bediener muss wissen, welche Person sein Supervisor ist. Darüber hinaus muss der Bediener sich stets zwischen den Kabelverarbeitungsmaschinen hin und her bewegen, um die Informationen auf den Monitoren der Kabelverarbeitungsmaschinen, die ihm zugeordnet sind, zu erfassen. Darüber hinaus muss der Bediener Material und/oder Kabelverarbeitungswerkzeuge, das bzw. die für eine seiner ihm zugeordneten bzw. zugewiesenen Kabelverarbeitungsmaschinen benötigt wird bzw. werden, aufwendig suchen, da er nicht weiß, wo das Material und/oder das benötigte Kabelverarbeitungswerkzeug ist.

Die EP 3 067 769 A1 offenbart ein Kabelverarbeitungsmaschinensteuerungssystem gemäß der eingangs genannten Art.

Es kann unter anderem ein Bedarf an einem Kabelverarbeitungsmaschinensteuerungssystem bzw. einem Kabelverarbeitungsmaschinensystem bzw. einem Verfahren zum Überwachen und Steuern von Kabelverarbeitungsmaschinen bestehen, bei dem Informationen bezüglich einer Kabelverarbeitungsmaschine für einen Benutzer der Kabelverarbeitungsmaschine (z.B. einem Bediener und/oder einem Supervisor) technisch einfach ortsunabhängig zugänglich sind bzw. gemacht werden und/oder bei dem ein Benutzer der Kabelverarbeitungsmaschine die Kabelverarbeitungsmaschine technisch einfach ortsunabhängig steuern kann.

Einem solchen Bedarf kann durch ein Kabelverarbeitungsmaschinensteuerungssystem gemäß Anspruch 1 bzw. ein Kabelverarbeitungsmaschinensystem gemäß Anspruch 7 bzw. ein Verfahren zum Überwachen und Steuern von Kabelverarbeitungsmaschinen gemäß Anspruch 9 entsprochen werden. Vorteilhafte Ausführungsformen sind in den abhängigen Ansprüchen definiert.

Gemäß einem ersten Aspekt der Erfindung wird ein Kabelverarbeitungsmaschinensteuerungssystem vorgeschlagen, umfassend - eine Middleware, wobei die Middleware zum Datenaustauschen mit Datenvermittlern von mehreren Kabelverarbeitungsmaschinen ausgebildet ist, und - ein tragbares Kommunikationsgerät, wobei das tragbare Kommunikationsgerät zum Datenaustauschen mit der Middleware ausgebildet ist und derart ausgebildet ist, dass, wenn sich ein Benutzer des Kabelverarbeitungsmaschinensteuerungssystems auf dem tragbaren Kommunikationsgerät eingeloggt hat, abhängig von einer durch die Middleware zugewiesenen Rolle des Benutzers -- dem Benutzer auf dem tragbaren Kommunikationsgerät unterschiedliche Informationen über die der zugewiesenen Rolle des Benutzers zugewiesenen Kabelverarbeitungsmaschinen angezeigt werden, wobei die Informationen den gerade durchgeführten Kabelverarbeitungsprozess der jeweiligen Kabelverarbeitungsmaschine, Fehlermeldungen der jeweiligen Kabelverarbeitungsmaschine, wie lange die jeweilige Kabelverarbeitungsmaschine zum Beenden des momentan durchgeführten Kabelverarbeitungsprozess benötigt, die Effizienz der jeweiligen Kabelverarbeitungsmaschine, den für die jeweilige Kabelverarbeitungsmaschine zuständigen Bediener, Supervisor und/oder Administrator, die Position der jeweiligen Kabelverarbeitungsmaschine, das gerade von der jeweiligen Kabelverarbeitungsmaschine benutzte Kabelverarbeitungswerkzeug, den Füllstand einer Aufnahme/Füllwanne für fertige Produkte der jeweiligen Kabelverarbeitungsmaschine und/oder den Füllstand von zu verarbeitenden Materialien der jeweiligen Kabelverarbeitungsmaschine umfassen,
und/oder -- dem Benutzer auf dem tragbaren Kommunikationsgerät unterschiedliche Aktionsmöglichkeiten zur Steuerung der der der zugewiesenen Rolle des Benutzers zugewiesenen Kabelverarbeitungsmaschinen zur Verfügung gestellt werden.

Ein Vorteil hiervon ist, dass dem Benutzer der Kabelverarbeitungsmaschine (z.B. dem Benutzer, ein Supervisor etc.) in der Regel technisch einfach ortsunabhängig Informationen bzw. Daten über die Kabelverarbeitungsmaschinen (Fehlermeldungen, der gerade stattfindende Kabelverarbeitungsprozess, das in der Kabelverarbeitungsmaschine vorhandene Kabelverarbeitungswerkzeug, der Füllstand einer Auffangwanne, die Effizienz der Kabelverarbeitungsmaschine etc.) bzw. Daten über die in der Hierarchie nächsthöherstehende Person (z.B. wer der Supervisor für einen Bediener ist) ortsunabhängig angezeigt werden können. Dies bedeutet, dass der Benutzer des Kabelverarbeitungsmaschinensteuerungssystems üblicherweise sich nicht von Kabelverarbeitungsmaschine zu Kabelverarbeitungsmaschine bewegen muss, um die Informationen von mehreren Kabelverarbeitungsmaschinen abzulesen und zu sammeln. Diese Informationen bzw. Daten können im Normalfall ortsunabhängig auf dem tragbaren Kommunikationsgerät angezeigt werden. Auch aggregierte Daten und aus den von der Middleware erhaltenen Primärdaten berechnete Daten können üblicherweise technisch einfach ortsunabhängig auf dem tragbaren Kommunikationsgerät angezeigt werden. Darüber hinaus werden dem Benutzer in der Regel nur Daten der Kabelverarbeitungsmaschinen angezeigt, die ihm bzw. seiner Rolle zugewiesen sind. Die auf dem tragbaren Kommunikationsgerät dargestellten bzw. abrufbaren Informationen können typischerweise abhängig von seiner Rolle sein. Z.B. braucht ein Fabrik-Manager, der für alle Kabelverarbeitungsmaschinen in einem Betrieb zuständig ist, in der Regel nicht über einzelne Fehlermeldungen einer Kabelverarbeitungsmaschine informiert werden bzw. diese Information muss ihm nicht angezeigt werden, während die Information für den Bediener, dem diese Kabelverarbeitungsmaschine zugewiesen ist, typischerweise sehr wichtig ist und diesem auf seinem tragbaren Kommunikationsgerät angezeigt wird. Zudem ist es in der Regel möglich, dass die Kabelverarbeitungsmaschinen technisch einfach ortsunabhängig gesteuert werden bzw. Daten mit den Kabelverarbeitungsmaschinen ausgetauscht werden. Hierdurch ist es typischerweise möglich, z.B. Fehlermeldungen einer Kabelverarbeitungsmaschine ortsunabhängig zu quittieren. Somit kann üblicherweise z.B. bei einem auftretenden Fehler einer Kabelverarbeitungsmaschine, die der Bediener, dem die Kabelverarbeitungsmaschine zugeordnet bzw. zugewiesen ist, nicht selbst quittieren darf, den für ihn zuständigen Supervisor einen Auftrag zukommen lassen, die Fehlermeldung der Kabelverarbeitungsmaschine zu quittieren, ohne dass der Bediener der Kabelverarbeitungsmaschine den Supervisor kennen und/oder suchen muss und ohne dass der Supervisor sich zu der Kabelverarbeitungsmaschine bewegen muss. Auch Änderungen des von der Kabelverarbeitungsmaschine durchgeführten Kabelverarbeitungsprozesses bzw. der Parameter hiervon sind typischerweise ortsunabhängig möglich. Die zur Verfügung gestellten Aktionsmöglichkeiten zur Steuerung der Kabelverarbeitungsmaschine, mittels denen über das tragbare Kommunikationsgerät die Kabelverarbeitungsmaschinen gesteuert werden können, können in der Regel von der Rolle abhängen, die dem Benutzer zugewiesen wird bzw. wurde. So kann typischerweise z.B. ein Supervisor mehr Aktionsmöglichkeiten zur Steuerung der Kabelverarbeitungsmaschine auf "seinem" tragbaren Kommunikationsgerät zur Verfügung haben als ein Bediener, da der Supervisor (der eine höhere Ausbildung, mehr Erfahrung und/oder mehr Wissen hat) mehr Zugriffsrechte als der Bediener auf die jeweilige Kabelverarbeitungsmaschine bzw. in der Middleware/über die Middleware hat. Somit kann in der Regel die Effizienz der Kabelverarbeitungsmaschinen erhöht und die Dauer der Betriebsunterbrechungen der Kabelverarbeitungsmaschinen verringert werden. Dies senkt typischerweise die Kosten.

Insbesondere kann die Kommunikation bzw. der Datenaustausch zwischen dem tragbaren Kommunikationsgerät und der Middleware sowie zwischen der Middleware und den Kabelverarbeitungsmaschinen in einem internen Netzwerk (z.B. einem Intranet) stattfinden bzw. durchgeführt werden, d.h. nicht über das Internet. Somit werden die ausgetauschten Informationen bzw. Daten in der Regel vor unerlaubtem Zugriff besonders sicher geschützt.

Gemäß einem zweiten Aspekt der Erfindung wird ein Kabelverarbeitungsmaschinensystem vorgeschlagen, umfassend - mehrere Kabelverarbeitungsmaschinen, wobei jede Kabelverarbeitungsmaschine einen Datenvermittler aufweist, wobei der jeweilige Datenvermittler mit Sensoren und/oder Aktuatoren der Kabelverarbeitungsmaschine auf einer Seite und einer Middleware auf einer anderen Seite Daten austauscht, und - ein Kabelverarbeitungsmaschinensteuerungssystem wie im drittvorangegangenen Absatz beschrieben einem der vorhergehenden Ansprüche, wobei das Kabelverarbeitungsmaschinensteuerungssystem Daten mit den Kabelverarbeitungsmaschinen austauscht und/oder die Kabelverarbeitungsmaschinen steuert.

Gemäß einem dritten Aspekt der Erfindung wird ein Verfahren zum Überwachen und Steuern von Kabelverarbeitungsmaschinen vorgeschlagen, wobei das Verfahren folgende Schritte umfasst: Einloggen eines Benutzers auf einem tragbaren Kommunikationsgerät, wobei das tragbare Kommunikationsgerät zum Datenaustauschen mit einer Middleware ausgebildet ist, wobei die Middleware zum Datenaustauschen mit Datenvermittlern von mehreren Kabelverarbeitungsmaschinen ausgebildet ist; Bestimmen einer Rolle des Benutzers durch die Middleware und Zuweisen der Rolle an den Benutzer; Zuweisen von Kabelverarbeitungsmaschinen an den Benutzer abhängig von seiner Rolle; und Anzeigen von Informationen von den dem Benutzer zugeordneten Kabelverarbeitungsmaschinen auf dem tragbaren Kommunikationsgerät, wobei die angezeigten Informationen abhängig von der dem Benutzer zugewiesenen Rolle ist, wobei die Informationen den gerade durchgeführten Kabelverarbeitungsprozess der jeweiligen Kabelverarbeitungsmaschine, Fehlermeldungen der jeweiligen Kabelverarbeitungsmaschine, wie lange die jeweilige Kabelverarbeitungsmaschine zum Beenden des momentan durchgeführten Kabelverarbeitungsprozess benötigt, die Effizienz der jeweiligen Kabelverarbeitungsmaschine, den für die jeweilige Kabelverarbeitungsmaschine zuständigen Bediener, Supervisor und/oder Administrator, die Position der jeweiligen Kabelverarbeitungsmaschine, das gerade von der jeweiligen Kabelverarbeitungsmaschine benutzte Kabelverarbeitungswerkzeug, den Füllstand einer Aufnahme/Füllwanne für fertige Produkte der jeweiligen Kabelverarbeitungsmaschine und/oder den Füllstand von zu verarbeitenden Materialien der jeweiligen Kabelverarbeitungsmaschine umfassen, und/oder Anzeigen von Aktionsmöglichkeiten zur Steuerung der der zugewiesenen Rolle zugewiesenen Kabelverarbeitungsmaschinen auf dem tragbaren Kommunikationsgerät sowie Steuern der Kabelverarbeitungsmaschinen gemäß der vom Benutzer ausgewählten Aktionsmöglichkeit.

Ein Vorteil dieses Verfahrens ist typischerweise, dass dem Benutzer der Kabelverarbeitungsmaschine (z.B. dem Benutzer, ein Supervisor etc.) technisch einfach ortsunabhängig Informationen bzw. Daten über die Kabelverarbeitungsmaschinen (Fehlermeldungen, der gerade stattfindende Kabelverarbeitungsprozess, das in der Kabelverarbeitungsmaschine vorhandene Kabelverarbeitungswerkzeug, der Füllstand einer Auffangwanne, die Effizienz der Kabelverarbeitungsmaschine etc.) bzw. Daten über die in der Hierarchie nächsthöherstehende Person (z.B. wer der Supervisor für einen Bediener ist) ortsunabhängig angezeigt werden können. Dies bedeutet, dass der Benutzer des Kabelverarbeitungsmaschinensteuerungssystems in der Regel sich nicht von Kabelverarbeitungsmaschine zu Kabelverarbeitungsmaschine bewegen muss, um die Informationen von mehreren Kabelverarbeitungsmaschinen abzulesen und zu sammeln. Diese Informationen bzw. Daten werden ortsunabhängig auf dem tragbaren Kommunikationsgerät angezeigt. Auch aggregierte Daten und aus den von der Middleware erhaltenen Primärdaten berechnete Daten können üblicherweise technisch einfach ortsunabhängig auf dem tragbaren Kommunikationsgerät angezeigt werden. Darüber hinaus werden dem Benutzer typischerweise nur Daten der Kabelverarbeitungsmaschinen angezeigt, die ihm bzw. seiner Rolle zugewiesen sind. Die auf dem tragbaren Kommunikationsgerät dargestellten bzw. abrufbaren Informationen können in der Regel abhängig von seiner Rolle sein. Z.B. braucht ein Fabrik-Manager, der für alle Kabelverarbeitungsmaschinen in einem Betrieb zuständig ist, typischerweise nicht über einzelne Fehlermeldungen einer Kabelverarbeitungsmaschine informiert werden bzw. diese Information muss ihm nicht angezeigt werden, während die Information für den Bediener, dem diese Kabelverarbeitungsmaschine zugewiesen ist, in der Regel sehr wichtig ist und diesem auf seinem tragbaren Kommunikationsgerät angezeigt wird. Zudem ist es typischerweise möglich, dass die Kabelverarbeitungsmaschinen technisch einfach ortsunabhängig gesteuert werden bzw. Daten mit den Kabelverarbeitungsmaschinen ausgetauscht werden. Hierdurch ist es in der Regel möglich, z.B. Fehlermeldungen einer Kabelverarbeitungsmaschine ortsunabhängig zu quittieren. Somit kann typischerweise z.B. bei einem auftretenden Fehler einer Kabelverarbeitungsmaschine, die der Bediener, dem die Kabelverarbeitungsmaschine zugeordnet bzw. zugewiesen ist, nicht selbst quittieren darf, den für ihn zuständigen Supervisor einen Auftrag zukommen lassen, die Fehlermeldung der Kabelverarbeitungsmaschine zu quittieren, ohne dass der Bediener der Kabelverarbeitungsmaschine den Supervisor kennen und/oder suchen muss und ohne dass der Supervisor sich zu der Kabelverarbeitungsmaschine bewegen muss. Auch Änderungen des von der Kabelverarbeitungsmaschine durchgeführten Kabelverarbeitungsprozesses bzw. der Parameter hiervon sind üblicherweise ortsunabhängig möglich. Die zur Verfügung gestellten Aktionsmöglichkeiten zur Steuerung der Kabelverarbeitungsmaschine, mittels denen über das tragbare Kommunikationsgerät die Kabelverarbeitungsmaschinen gesteuert werden können, können typischerweise von der Rolle abhängen, die dem Benutzer zugewiesen wird bzw. wurde. So kann in der Regel z.B. ein Supervisor mehr Aktionsmöglichkeiten zur Steuerung der Kabelverarbeitungsmaschine auf "seinem" tragbaren Kommunikationsgerät zur Verfügung haben als ein Bediener, da der Supervisor (der eine höhere Ausbildung, mehr Erfahrung und/oder mehr Wissen hat) mehr Zugriffsrechte als der Bediener auf die jeweilige Kabelverarbeitungsmaschine bzw. in der Middleware/über die Middleware hat. Somit kann durch dieses Verfahren typischerweise die Effizienz der Kabelverarbeitungsmaschinen erhöht und die Dauer der Betriebsunterbrechungen der Kabelverarbeitungsmaschinen verringert werden. Dies senkt in der Regel die Kosten.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Gemäß einer Ausführungsform ist das Kabelverarbeitungsmaschinensteuerungssystem derart ausgebildet, dass dem Benutzer die Rolle abhängig von einer Rollen-Datenbank und/oder einer Rollen-Schichttabelle zugewiesen wird. Vorteilhaft hieran ist, dass die Rolle dem Benutzer üblicherweise technisch einfach zugewiesen werden kann.

Gemäß einer Ausführungsform ist das Kabelverarbeitungsmaschinensteuerungssystem derart ausgebildet, dass die Kabelverarbeitungsmaschinen der Rolle abhängig von einer Rollen-Datenbank und/oder einer Rollen-Schichttabelle zugewiesen werden. Ein Vorteil hiervon ist, dass die Kabelverarbeitungsmaschinen typischerweise technisch einfach den Rollen zugewiesen werden können.

Gemäß einer Ausführungsform umfasst das tragbare Kommunikationsgerät einen Laptop, ein Smartphone, einen Tabletcomputer, eine Smart-Watch und/oder eine Brille mit einem optischen Display. Vorteilhaft hieran ist, dass das tragbare Kommunikationsgerät in der Regel kostengünstig ist. Zudem können typischerweise standardisierte tragbare Kommunikationsgeräte verwendet werden.

Gemäß einer Ausführungsform ist das Kabelverarbeitungsmaschinensteuerungssystem derart ausgebildet, dass Positionen von Kabelverarbeitungswerkzeugen für die Kabelverarbeitungsmaschinen und/oder Positionen von Materialien für die Kabelverarbeitungsmaschinen erfasst werden und die Positionen der Kabelverarbeitungswerkzeuge und/oder Materialien auf dem tragbaren Kommunikationsgerät angezeigt werden. Vorteilhaft hieran ist, dass bei dem Kabelverarbeitungsmaschinensteuerungssystem Kabelverarbeitungswerkzeuge und/oder Materialien typischerweise schnell und einfach aufgefunden werden können und somit schnell ein Wechsel des Kabelverarbeitungswerkzeugs und/oder des Materials durchgeführt werden kann. Dies senkt in der Regel die Zeitspanne bzw. Dauer von Betriebsunterbrechungen der Kabelverarbeitungsmaschinen und senkt somit typischerweise die Kosten.

Gemäß einer Ausführungsform ist das Kabelverarbeitungsmaschinensteuerungssystem derart ausgebildet, dass die Middleware mit einer enterprise-resource-planning-Einheit und/oder einem Fertigungsmanagementsystem Daten austauscht. Vorteilhaft hieran ist, dass das Kabelverarbeitungsmaschinensteuerungssystem üblicherweise besonders effizient betrieben werden kann.

Gemäß einer Ausführungsform ist das Kabelverarbeitungsmaschinensystem derart ausgebildet, dass die Middleware mit einer enterprise-resource-planning-Einheit und/oder einem Fertigungsmanagementsystem Daten austauscht. Vorteilhaft hieran ist, dass das Kabelverarbeitungsmaschinensystem in der Regel besonders effizient betrieben werden kann.

Gemäß einer Ausführungsform wird dem Benutzer die Rolle abhängig von einer Rollen-Datenbank und/oder einer Rollen-Schichttabelle zugeordnet. Vorteilhaft an diesem Verfahren ist, dass die Rolle dem Benutzer typischerweise technisch einfach zugewiesen werden kann.

Gemäß einer Ausführungsform werden die Informationen, die dem Benutzer auf dem tragbaren Kommunikationsgerät angezeigt, von der Middleware von den Kabelverarbeitungsmaschinen empfangen werden und von der Middleware an das tragbare Kommunikationsgerät gesandt werden, sofern die entsprechende Kabelverarbeitungsmaschine der Rolle des jeweiligen Benutzers des tragbaren Kommunikationsgeräts zugewiesen ist. Hierdurch kann der Benutzer üblicherweise technisch einfach mit den Kabelverarbeitungsmaschinen Daten austauschen, ohne dass das tragbare Kommunikationsgerät direkt mit den Kabelverarbeitungsmaschinen Daten austauscht. Somit kann die Kommunikation zwischen den Kabelverarbeitungsmaschinen und der Middleware bzw. der Middleware mit dem tragbaren Kommunikationsgerät typischerweise unabhängig voneinander geändert werden.

Gemäß einer Ausführungsform tauscht die Middleware mit einer enterprise-resource-planning-Einheit und/oder einem Fertigungsmanagementsystem Daten aus. Vorteilhaft an diesem Verfahren ist, dass das Kabelverarbeitungsmaschinensystem in der Regel besonders effizient betrieben werden kann.

Gemäß einer Ausführungsform werden Positionen von Kabelverarbeitungswerkzeugen und/oder von Materialien für die Kabelverarbeitungsmaschinen erfasst und die Positionen der Kabelverarbeitungswerkzeuge und/oder Materialien werden auf dem tragbaren Kommunikationsgerät angezeigt. Vorteilhaft an diesem Verfahren ist, dass bei dem Kabelverarbeitungsmaschinensteuerungssystem Kabelverarbeitungswerkzeuge und/oder Materialien typischerweise schnell und einfach aufgefunden werden können und somit schnell ein Wechsel des Kabelverarbeitungswerkzeugs und/oder des Materials durchgeführt werden kann. Dies senkt in der Regel die Zeitspanne bzw. Dauer von Betriebsunterbrechungen der Kabelverarbeitungsmaschinen und senkt somit typischerweise die Kosten.

Gemäß einer Ausführungsform des Verfahrens werden die Kabelverarbeitungsmaschinen der Rolle abhängig von einer Rollen-Datenbank und/oder einer Rollen-Schichttabelle zugeordnet. Vorteilhaft an diesem Verfahren ist, dass die Rolle dem Benutzer üblicherweise technisch einfach zugewiesen wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.

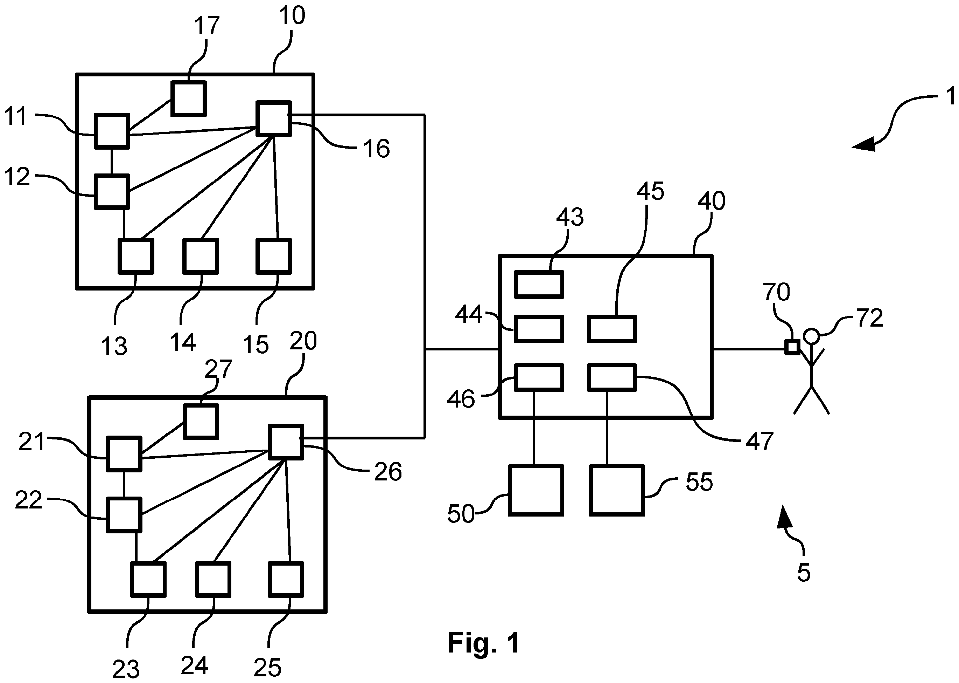

- Fig. 1 zeigt: eine schematische Ansicht einer Ausführungsform des erfindungsgemäßen Kabelverarbeitungsmaschinensystems umfassend mehrere Kabelverarbeitungsmaschinen und ein Kabelverarbeitungsmaschinensteuerungssystem.

Die Figur ist lediglich schematisch und nicht maßstabsgetreu. Gleiche Bezugszeichen bezeichnen in der Figur gleiche oder gleichwirkende Merkmale

Fig. 1 zeigt eine schematische Ansicht einer Ausführungsform des erfindungsgemäßen Kabelverarbeitungsmaschinensystems 1 umfassend mehrere Kabelverarbeitungsmaschinen 10, 20 und ein Kabelverarbeitungsmaschinensteuerungssystem 5.

Das Kabelverarbeitungsmaschinensteuerungssystem 5 umfasst ein tragbares Kommunikationsgerät 70 (sogenanntes Wearable) und eine Middleware 40 (auch Zwischensystem genannt).

Das tragbare Kommunikationsgerät 70 kann z.B. ein Smartphone, einen Laptop, einen Tabletcomputer, eine Smart-Watch und/oder eine Brille mit einem optischen Display sein oder umfassen. Das tragbare Kommunikationsgerät 70 wird von einem Benutzer 72 bzw. den Benutzern des Kabelverarbeitungsmaschinensteuerungssystems 5 getragen. Das tragbare Kommunikationsgerät 70 kann insbesondere ein Touch-Screen-Display umfassen.

Das tragbare Kommunikationsgerät 70 kann die von der Middleware 40 empfangenen Informationen bzw. Daten aufbereiten bzw. weitere Daten aus den Primärdaten berechnen.

Die Anzahl der tragbaren Kommunikationsgeräte 70 beträgt mindestens die Anzahl an gleichzeitigen Benutzern 72 des Kabelverarbeitungsmaschinensteuerungssystems 5. Dies bedeutet, dass jeder Benutzer 72 während seiner Arbeitszeit bzw. seiner Schichtzeit ein "eigenes" tragbares Kommunikationsgerät 70 hat, welches er bei sich trägt.

Die Middleware 40 ist die Schnittstelle zwischen dem tragbaren Kommunikationsgerät 70 und den Kabelverarbeitungsmaschinen 10, 20. Die Middleware 40 empfängt und sammelt die Daten bzw. Informationen von den Kabelverarbeitungsmaschinen 10, 20. In Fig. 1 sind zwei Kabelverarbeitungsmaschinen 10, 20 gezeigt. Die Anzahl kann jedoch höher bzw. deutlich höher sein. Die Anzahl der Kabelverarbeitungsmaschinen 10, 20 kann insbesondere ca. 10, 50 oder 100 sein. Die Middleware 40 kann Hardware und/oder Software sein oder umfassen.

Die Middleware 40 weist mehrere Verarbeitungseinheiten auf, die jeweils eine Funktionalität 43-47 umfassen, die auf der jeweiligen Verarbeitungseinheit laufen. Die Verarbeitungseinheiten können jeweils eine oder mehrere Instanzen einer Software oder Hardware umfassen oder sein.

Die Middleware 40 weist dem Benutzer 72, wenn sich dieser auf bzw. mittels seines tragbaren Kommunikationsgeräts 70 einloggt bzw. eingeloggt hat, eine Rolle zu. Unterschiedlichen Rollen sind unterschiedliche Kabelverarbeitungsmaschinen 10, 20 zugeordnet bzw. zugewiesen. Jeder Rolle ist üblicherweise eine gewisse Anzahl (z.B. 10 oder 20) Kabelverarbeitungsmaschinen 10, 20 zugewiesen. Unterschiedliche Rollen haben unterschiedliche Zugriffsrechte auf die Kabelverarbeitungsmaschinen 10, 20 bzw. einen Teil hiervon. Dies bedeutet, dass manche Rollen nur bestimmte Vorgänge bzw. Aktionen (z.B. Fehlermeldungen nur bestimmter Art zu quittieren) durchführen dürfen, während andere Rollen alle Arten von Vorgängen bzw. Aktionen (z.B. Fehlermeldungen aller Art zu quittieren) an der Kabelverarbeitungsmaschine 10, 20 durchführen dürfen. Die Aktionsmöglichkeiten der jeweiligen Rolle werden auf dem tragbaren Kommunikationsgerät 70 angezeigt bzw. sind anzeigbar/aufrufbar. Zudem können manche Rollen nur Zugriffsrechte für die ihnen jeweils zugewiesenen Kabelverarbeitungsmaschinen 10, 20. Durch Auswählen einer Aktionsmöglichkeit wird ein entsprechender Steuerbefehl über das tragbare Kommunikationsgerät 70 via die Middleware 40 an den Datenvermittler 16, 26 der entsprechenden Kabelverarbeitungsmaschine 10, 20 gesandt. Dort wird der Steuerbefehl dann ausgeführt bzw. umgesetzt.

Die Rollen könnten entsprechend einem Schichtplan bzw. einer Schicht-Tabelle oder einer Schicht-Datenbank zugewiesen werden. In der Schicht-Tabelle bzw. der Schicht-Datenbank ist festgelegt, welche Kabelverarbeitungsmaschinen 10, 20 einer bestimmten Person bzw. einer bestimmten Rolle zu einer bestimmten Zeit zugeordnet sind und welche Zugriffsrechte auf die Kabelverarbeitungsmaschinen 10, 20 die bestimmte Person zu der bestimmten Zeit hat.

Auch können gemäß dem Schichtplan bzw. der Schicht-Tabelle oder der Schicht-Datenbank den verschiedenen Rollen verschiedene Kabelverarbeitungsmaschine 10, 20 zugeordnet werden.

Insbesondere kann es sogenannte Bediener und sogenannte Supervisoren als Rollen geben. Die Bediener betreiben die ihnen jeweils zugewiesenen Kabelverarbeitungsmaschinen 10, 20, d.h. führen der Kabelverarbeitungsmaschine 10, 20 Materialien zu, transportieren Erzeugnisse ab und/oder wechseln Kabelverarbeitungswerkzeuge, die von den Kabelverarbeitungsmaschinen 10, 20 verwendet werden. Bediener haben nur eingeschränkte Zugriffsrechte bzw. Aktionsmöglichkeiten zum Steuern der ihnen jeweils zugewiesenen Kabelverarbeitungsmaschinen 10, 20. Supervisor stehen hierarchisch über den Bedienern. Mehrere Bediener sind jeweils einem Supervisor zugeordnet. Supervisoren haben mehr Zugriffsrechte bzw. Aktionsmöglichkeiten oder sogar vollständige Zugriffsrechte bzw. Aktionsmöglichkeiten bezüglich der Kabelverarbeitungsmaschinen 10, 20, die ihnen bzw. den ihnen untergeordneten Bedienern zugeordnet sind. Insbesondere können Supervisoren Fehlermeldungen quittieren, die Bediener nicht quittieren können bzw. dürfen.

Auch kann es weitere Rollen, wie z.B. Einrichter (dieser ist berechtigt, bestimmte Einstellungen der ihm zugewiesenen Kabelverarbeitungsmaschinen 10, 20 zu verändern), Administrator (dieser ist berechtigt, jegliche Art von Änderungen der Einstellungen aller Kabelverarbeitungsmaschinen 10, 20 zu verändern) etc., geben.

Die Aktionsmöglichkeiten können unter anderem das Quittieren von Fehlermeldungen, das Zurücksetzen des Zustands der Kabelverarbeitungsmaschine 10, 20 (Resetten), die Veränderung von Parametern des Kabelverarbeitungsprozesses der Kabelverarbeitungsmaschine 10, 20, das Starten bzw. Stoppen der Kabelverarbeitungsmaschine 10, 20 und/oder den Wechsel zwischen mehreren Kabelverarbeitungswerkzeugen, die in der Kabelverarbeitungsmaschine 10, 20 vorhanden sind, umfassen.

Die Informationen über die Kabelverarbeitungsmaschine 10, 20 können unter anderem den gerade durchgeführten Kabelverarbeitungsprozess der jeweiligen Kabelverarbeitungsmaschine 10, 20, Fehlermeldungen der jeweiligen Kabelverarbeitungsmaschine 10, 20, wie lange die jeweilige Kabelverarbeitungsmaschine 10, 20 zum Beenden des momentan durchgeführten Kabelverarbeitungsprozess benötigt, die Effizienz der jeweiligen Kabelverarbeitungsmaschine 10, 20, den für die jeweilige Kabelverarbeitungsmaschine 10, 20 zuständigen Bediener, Supervisor und/oder Administrator, die Position der jeweiligen Kabelverarbeitungsmaschine 10, 20, das gerade von der jeweiligen Kabelverarbeitungsmaschine 10, 20 benutzte Kabelverarbeitungswerkzeug, den Füllstand einer Aufnahme/Füllwanne für fertige Produkte der jeweiligen Kabelverarbeitungsmaschine 10, 20 und/oder der Füllstand von zu verarbeitenden Materialien der jeweiligen Kabelverarbeitungsmaschine 10, 20 umfassen.

Die Middleware 40 kann zudem mit einer enterprise-resource-planning-Einheit 50 (z.B. SAP R/3) und/oder einem Fertigungsmanagementsystem 55 kommunizieren bzw. Daten austauschen. Die enterprise-resource-planning-Einheit 50 bzw. das Fertigungsmanagementsystem 55 kann die Kabelverarbeitungsmaschinen 10, 20 teilweise oder vollständig steuern.

Jede der Kabelverarbeitungsmaschinen 10, 20 umfasst einen Datenvermittler 16, 26, eine Datenbank 17, 27, einen oder mehrere Sensoren und/oder Aktuatoren 13-15, 23-25, eine Steuerungssoftware 12, 22 und eine Benutzerschnittstelle 11, 21. Der Datenvermittler 16, 26 kommuniziert mit den weiteren Elementen der Kabelverarbeitungsmaschine 10, 20 und mit der Middleware 40 und tauscht Daten mit der Middleware 40 aus. Die Steuerungssoftware 12, 22 steuert die Abläufe innerhalb der Kabelverarbeitungsmaschine 10, 20.

Die Datenbank 17, 27 kann auch eine gemeinsame Datenbank mehrerer Kabelverarbeitungsmaschinen 10, 20 oder eine gemeinsame Datenbank aller Kabelverarbeitungsmaschinen 10, 20 sein. In der Datenbank 17, 27 können Prozessparameter, die bisher abgearbeiteten Jobs bzw. Aufträge der Kabelverarbeitungsmaschine 10, 20, Qualitätsfeedbackdaten, Daten über den Zustand der Kabelverarbeitungsmaschinen 10, 20 etc. gespeichert sein.

Die Sensoren bzw. Aktuatoren 13-15, 23-25 messen bestimmte Zustände der Kabelverarbeitungsmaschine 10, 20 bzw. führen bestimmte mechanische, hydraulische, elektrisch oder elektro-mechanische Vorgänge in der Kabelverarbeitungsmaschine 10, 20 durch bzw. aus.

Es ist auch möglich, dass Eingaben eines bzw. des Bedieners des Kabelverarbeitungsmaschinensystems 1 bzw. seine Interaktion mit dem Kabelverarbeitungsmaschinensystems 1 oder einem Teil hiervon als Sensor bzw. Aktuator des Kabelverarbeitungsmaschinensystems 1 interpretiert wird bzw. als solche behandelt werden. Insbesondere können Eingaben des Bedieners des Kabelverarbeitungsmaschinensystems 1 von der Middleware als Daten von einem Sensor und/oder von einem Aktuator interpretiert werden. Bestimmte Aktionen eines Bedieners des Kabelverarbeitungsmaschinensystems 1 können erkannt werden.

Der Bediener kann z.B. über eine maschinelle Schnittstelle des Kabelverarbeitungsmaschinensystems 1 Daten bzw. Werte in das Kabelverarbeitungsmaschinensystem 1 eingeben, die vom Kabelverarbeitungsmaschinensystem 1 als Daten bzw. Werte von einem Sensor und/oder von einem Aktuator interpretiert werden bzw. als solche behandelt werden.

Auch ist vorstellbar, dass die Bediener des Kabelverarbeitungsmaschinensystems 1 einen Roboter oder mehrere Roboter umfassen. Eingaben des Roboters können als Daten von einem Sensor und/oder von einem Aktuator des Kabelverarbeitungsmaschinensystems 1 interpretiert bzw. als solche behandelt werden. Neben dem Roboter können ein oder mehrere Menschen zugleich Bediener des Kabelverarbeitungsmaschinensystems 1 sein.

Die Bediener des Kabelverarbeitungsmaschinensystems 1 haben jeweils spezielle Fähigkeiten bzw. individuelle Fähigkeiten und individuelle bzw. spezifische Zugriffsrechte auf das Kabelverarbeitungsmaschinensystems 1 bzw. Teile hiervon bzw. die Kabelverarbeitungsmaschinen 10, 20.

Die Benutzerschnittstelle 11, 21 dient zum Kommunizieren mit dem Benutzer 72. Die Benutzerschnittstelle 11, 21 kann z.B. ein Keyboard, eine Computermaus und einen Monitor umfassen.

Der Datenvermittler 16, 26 tauscht Daten mit der Middleware 40 aus. Der Datenvermittler 16, 26 (auch Broker oder Information Broker genannt) stellt eine Schnittstelle zwischen den einzelnen Elementen der jeweiligen Kabelverarbeitungsmaschine 10, 20 auf der einen Seite und der Middleware 40 auf der anderen Seite dar. Der Datenvermittler 16, 26 kann eine Hardware und/oder eine Software umfassen oder sein.

Die Datenverbindungen zwischen den Datenvermittlern 16, 26 der Kabelverarbeitungsmaschinen 10, 20 und der Middleware 40 können jeweils kabelgebunden oder kabellos stattfinden. Die Datenverbindung zwischen der Middleware 40 und dem tragbaren Kommunikationsgerät 70 findet kabellos statt.

Die Kabelverarbeitungsmaschine 10, 20 kann insbesondere eine Crimpmaschine sein. Das Kabelverarbeitungswerkzeug kann ein Crimpwerkzeug sein. Die Materialien können z.B. Kabel, Kabelelemente und/oder Kontaktstreifen oder ähnliches umfassen.

Das Kabelverarbeitungsmaschinensteuerungssystem 5 kann die Positionen von Materialien, Kabelverarbeitungswerkzeugen etc. erfassen. Dies kann z.B. mittels RFID-Chips durchgeführt werden. Wenn nun ein Material oder ein Kabelverarbeitungswerkzeug an einer Kabelverarbeitungsmaschine 10, 20 benötigt wird, kann der Benutzer 72 über sein tragbares Kommunikationsgerät 70 die Position bzw. den Ort des Materials oder des Kabelverarbeitungswerkzeug schnell erfahren bzw. dies ihm auf seinem tragbaren Kommunikationsgerät 70 angezeigt werden. Auch der Weg zu der Position bzw. dem Ort kann ihn auf dem tragbaren Kommunikationsgerät 70 angezeigt werden. Darüber hinaus kann die für das Material bzw. das Kabelverarbeitungswerkzeug momentan zuständige Person über das tragbare Kommunikationsgerät 70 informiert werden, dass bzw. welches Material bzw. welches Kabelverarbeitungswerkzeug demnächst von jemanden abgeholt wird.

Mittels dem Kabelverarbeitungsmaschinensteuerungssystem 5 lässt sich beispielsweise die Materiallogistik vereinfachen, insbesondere die Material- und Identifikationsunterstützung. Dies wird nachfolgend anhand eines ersten Beispiels erläutert.

Die Benutzer 72 der Kabelverarbeitungsmaschinen 10, 20 haben jeweils ein tragbares Kommunikationsgerät 70 (Wearable), das sie während ihrer Arbeitszeit stets bei sich tragen. Mit ihm können ortsunabhängig für die jeweiligen Benutzer 72 freigegebenen Informationen zu benötigtem Material für den kommenden Auftrag bereitgestellt werden. Beim Schichtbeginn loggt sich der Bediener an seinem tragbaren Kommunikationsgerät 70 ein. Seine Rolle ("Bediener") sowie die ihm bzw. seiner Rolle zugewiesenen Kabelverarbeitungsmaschinen 10, 20 werden anhand einer Rollen-Datenbank und/oder anhand einer Schicht-Tabelle bestimmt. Dies kann insbesondere durch die Middleware 40 durchgeführt werden. Somit stehen seine Rolle sowie die ihm zugewiesenen Kabelverarbeitungsmaschinen 10, 20 fest.

Der Bediener bekommt über sein tragbares Kommunikationsgerät 70 mitgeteilt, dass er für den nun anstehenden Job bzw. Prozess der Kabelverarbeitungsmaschine 10, 20 das Kabel wechseln soll sowie die Identifikationsnummer des zu wechselnden Kabels. Dem Bediener wird beim Wechseln des Kabels auf seinem tragbaren Kommunikationsgerät 70 angezeigt, welches das richtige Kabelfass ist (wenn er eine Auswahl von Fässern zur Verfügung hat), da er zu dem Zeitpunkt nicht vor dem Bedienbildschirm der Kabelverarbeitungsmaschine 10, 20 steht. Selbst wenn er im "Kabellager" das entsprechende Kabel selber holen muss, wird ihm auf seinem tragbaren Kommunikationsgerät 70 angezeigt, welches das richtige Kabel von mehreren Kabeln ist.

Falls eine Rolle des Materialbereitstellers definiert ist, loggt sich dieser (am Anfang seiner Schicht bzw. seiner Arbeitszeit) ebenfalls auf einem tragbaren Kommunikationsgerät 70 ein. Somit sind auch seine Rolle sowie die ihm zugewiesenen Kabelverarbeitungsmaschinen 10, 20 definiert bzw. festgelegt. Wenn ein Kabelwechsel bei der obigen Kabelverarbeitungsmaschine 10, 20 ansteht, wird dem Materialbereitsteller auf seinem tragbaren Kommunikationsgerät 70 angezeigt bzw. dieser über sein tragbares Kommunikationsgerät 70 informiert, bei welcher der ihm zugewiesenen Kabelverarbeitungsmaschine 10, 20 ein Materialwechsel durchzuführen ist und der Materialbereitsteller kann der entsprechenden Kabelverarbeitungsmaschine 10, 20 das korrekte Material zur Verfügung stellen. Das Material bzw. die Materialien kann/können entweder der Materialbereitsteller zu den entsprechenden Kabelverarbeitungsmaschinen 10, 20 bringen oder er stellt das Material bzw. die Materialien dem Bediener bereit, der das Material bzw. die Materialien abholt. Auf diese Weise wird der Austausch von Material an den Kabelverarbeitungsmaschinen 10, 20 vereinfacht und beschleunigt.

Mittels dem Kabelverarbeitungsmaschinensteuerungssystem 5 lässt sich beispielsweise ein Wechsel eines Kabelverarbeitungswerkzeugs einer Kabelverarbeitungsmaschine 10, 20 vereinfachen und beschleunigen. Dies wird nachfolgend anhand eines zweiten Beispiels erläutert.

Der Bediener braucht für den nächsten Auftrag für eine Kabelverarbeitungsmaschine 10, 20 ein anderes Kabelverarbeitungswerkzeug als das in der Kabelverarbeitungsmaschine 10, 20 geladene bzw. gerade verwendete Kabelverarbeitungswerkzeug. Beim Schichtbeginn loggt sich der Bediener an seinem tragbaren Kommunikationsgerät 70 (Wearable) ein. Von der Middleware 40 wird ihm auf Grundlage seiner Login-Daten eine Rolle auf Basis einer Schichttabelle, Schicht-Datenbank oder ähnlichem zugewiesen. Der Rolle sind einige Kabelverarbeitungsmaschinen 10, 20 zugewiesen, die somit auch dem Benutzer 72 bzw. Bediener zugewiesen sind. Somit sind seine Rolle sowie die ihm zugewiesenen Kabelverarbeitungsmaschinen 10, 20 festgelegt.

Beim Laden eines neuen Auftrages sieht er sowohl auf der Anzeige der Kabelverarbeitungsmaschine 10, 20 als auch auf seinem tragbaren Kommunikationsgerät 70 (Wearable), dass er eine andere Kontaktrolle sowie ein anderes Crimp-Werkzeug als die in der Kabelverarbeitungsmaschine 10, 20 vorhandenen für den neuen Auftrag benötigt. Mittels der Middleware 40 ist bekannt, welches Kabelverarbeitungswerkzeug verwendet werden soll und wo sich dieses im Moment befindet (z.B. im Lager, im Regal neben der Kabelverarbeitungsmaschine 10, 20, auf der Kabelverarbeitungsmaschine 10, 20 nebenan). Dadurch kann der Bediener diese Information, wo sich das zu verwendete Kabelverarbeitungswerkzeug befindet, über sein tragbares Kommunikationsgerät 70 abrufen bzw. dies wird ihm aktiv angezeigt. Falls sich das Kabelverarbeitungswerkzeug im Lager befindet, wird dem Lagermitarbeiter (welcher sich ebenfalls an seinem tragbaren Kommunikationsgerät 70 einloggt und dessen Rolle somit definiert bzw. festgelegt ist) wiederum über sein tragbares Kommunikationsgerät 70 angezeigt bzw. informiert, dass er das besagte Kabelverarbeitungswerkzeug an den Bediener herausgeben muss. Falls sich das Kabelverarbeitungswerkzeug auf einer anderen Kabelverarbeitungsmaschine 10, 20 befindet, erfährt der Bediener dieser Kabelverarbeitungsmaschine 10, 20 durch eine Anzeige auf seinem tragbaren Kommunikationsgerät 70, dass sein Kabelverarbeitungswerkzeug von einem anderen Bediener abgeholt und verwendet werden wird. Somit kann eine Austausch bzw. ein Wechsel des Kabelverarbeitungswerkzeugs vereinfacht und beschleunigt werden.

Mittels dem Kabelverarbeitungsmaschinensteuerungssystem 5 lässt sich beispielsweise ein Quittieren von Fehlermeldungen von Kabelverarbeitungsmaschine 10, 20 vereinfachen und beschleunigen. Dies wird nachfolgend anhand eines dritten Beispiels erläutert.

Beim Schichtbeginn loggen sich sowohl der Bediener als auch der Schicht-Supervisor jeweils an ihren tragbaren Kommunikationsgeräten 70 ein. Somit sind sowohl für den Bediener als auch für den Supervisor die Rolle sowie die ihnen jeweils zugewiesenen Kabelverarbeitungsmaschine 10, 20 bestimmt. Der Bediener bekommt während seiner Schicht auf seinem tragbaren Kommunikationsgerät 70 sämtliche Fehlermeldungen seiner ihm zugewiesenen Kabelverarbeitungsmaschine 10, 20 inklusive der Angabe, auf welcher Kabelverarbeitungsmaschine 10, 20 der Fehler auftritt, angezeigt (gegebenenfalls mit entsprechenden akustischen Hinweisen und/oder mit taktilen Hinweisen, d.h. beispielsweise mittels eines Vibrationsalarms). Dies ist vor allem wichtig, wenn der Bediener nicht direkt vor dem Bildschirm der entsprechenden Kabelverarbeitungsmaschine 10, 20 steht, welche den Fehler anzeigt, aber auch, wenn zwei seiner ihm zugeteilten Kabelverarbeitungsmaschine 10, 20 jeweils einen Fehler aufweisen. Somit weiß der Bediener mittels des tragbaren Kommunikationsgeräts 70 auch, was zu tun ist, ohne zuerst um die Kabelverarbeitungsmaschine 10, 20 herum zu laufen um den Fehler auf dem Bildschirm der Kabelverarbeitungsmaschine 10, 20 abzulesen. Der Supervisor seinerseits bekommt die "normalen" Fehler bzw. nicht-wichtige Fehler der ihm zugewiesenen Kabelverarbeitungsmaschine 10, 20 nicht auf seinem tragbaren Kommunikationsgerät 70 angezeigt, da sie ihn im Normalfall nicht zu interessieren brauchen.

Wenn nun aber eine Kabelverarbeitungsmaschine 10, 20 einen Fehler aufweist, welcher nicht durch den Bediener quittiert bzw. bestätigt oder behoben werden darf, sondern nur durch den Supervisor (der Bediener bzw. die Kabelverarbeitungsmaschine 10, 20 kann sonst nicht weiterarbeiten), wird diese Fehlermeldung dem Supervisor auf seinem tragbaren Kommunikationsgerät 70 dargestellt, inklusive der entsprechenden Kabelverarbeitungsmaschine 10, 20 sowie dem Bediener, welchem diese Kabelverarbeitungsmaschine 10, 20 aktuell zugeordnet bzw. zugewiesen ist. Dem Bediener wird dieser Fehler ebenfalls auf dem tragbaren Kommunikationsgerät 70 dargestellt mit der zusätzlichen Information, welcher Supervisor dafür zuständig ist. Der Supervisor kann so zeitnah an die entsprechende Kabelverarbeitungsmaschine 10, 20 gehen, sich dort gegebenenfalls einloggen und den Fehler bestätigen oder beheben, damit der Bediener der entsprechenden Kabelverarbeitungsmaschine 10, 20 bzw. die Kabelverarbeitungsmaschine 10, 20 weiterarbeiten kann. Auch eine Quittierung des Fehlers der Kabelverarbeitungsmaschine 10, 20 mittels des tragbaren Kommunikationsgeräts 70 aus der Ferne ist möglich. Folglich wird bzw. ist das Quittieren von Fehlermeldungen beschleunigt und vereinfacht. Dies führt zu kürzen Unterbrechungen des Betriebs der Kabelverarbeitungsmaschinen 10, 20.

Mittels dem Kabelverarbeitungsmaschinensteuerungssystem 5 lässt sich beispielsweise ein schlechte Performance bzw. Ineffizienz einer Kabelverarbeitungsmaschine 10, 20 schnell beheben bzw. beseitigen. Dies wird nachfolgend anhand eines vierten Beispiels erläutert.

Beim Schichtbeginn loggen sich sowohl der Bediener als auch der Schicht-Supervisor jeweils an ihren tragbaren Kommunikationsgeräten 70 ein. Somit sind sowohl für den Bediener als auch für den Supervisor die Rolle sowie die ihnen zugewiesenen Kabelverarbeitungsmaschinen 10, 20 bestimmt.

Während der Schicht sieht der Supervisor, welche seiner zu überwachenden Kabelverarbeitungsmaschinen 10, 20 nicht optimal laufen, sei es wegen nicht idealen Prozessparametern oder wegen zu vielen Prozessfehlern. Er sieht aber auch, wenn eine Kabelverarbeitungsmaschine 10, 20 lange benötigt, um einen Job einzurichten und mit dem Produzieren anzufangen. Bei schlechten Prozessparametern kann er der Kabelverarbeitungsmaschinen 10, 20 bzw. dem Bediener der Kabelverarbeitungsmaschinen 10, 20 vorschlagen, mit optimaleren Prozessparametern zu produzieren.

Dem Bediener seinerseits wird auf seinem tragbaren Kommunikationsgerät 70 angezeigt, dass der Supervisor einen Vorschlag zur Optimierung einer ihm zugewiesenen Kabelverarbeitungsmaschine 10, 20 gemacht hat, und kann den Vorschlag annehmen oder verwerfen. Bei zu vielen Prozessfehlern oder zu langer Einrichtzeit geht der Supervisor persönlich zu der Kabelverarbeitungsmaschinen 10, 20 vorbei und versucht, das Problem vor Ort zu beheben. Somit kann eine Ineffizienz einer Kabelverarbeitungsmaschine 10, 20 schnell behoben werden. Dies senkt die Herstellungszeit und die Herstellungskosten der zu verarbeitenden Kabel.

Die Anwendungen bzw. die Software, die auf dem tragbaren Kommunikationsgerät 70 laufen, umfassen alle gängigen Technologien (Native Applikationen, Container wie Docker/LXC/LXD respektive auch Webanwendungen, usw.). Gleiches gilt für die Software auf dem Zwischensystem bzw. der Middleware 40.

Die Software auf dem tragbaren Kommunikationsgerät 70 und/oder die Software auf dem Zwischensystem bzw. der Middleware 40 kann auf verschiedene Art und Weise auf dem tragbaren Kommunikationsgerät 70 und/oder auf der Middleware installiert/eingerichtet bzw. ausgeliefert bzw. deployed werden. Dies kann lokal durchgeführt werden und/oder mittels Fernwartung.

Die unterschiedlichen Rollen bekommen unterschiedliche Informationen jeweils auf ihrem tragbaren Kommunikationsgerät 70 angezeigt. Beispielsweise wird dem Bediener die OEE-Kennzahlen (Overall Equipment Effectiveness = Gesamtanlageneffektivität) der ihm zugewiesenen Kabelverarbeitungsmaschinen 10, 20 angezeigt bzw. diese Zahlen sind abrufbar. Dem Einrichter werden die OEE-Kennzahlen der ihm zugeteilten Kabelverarbeitungsmaschinen 10, 20 und die jeweils zur Kabelverarbeitungsmaschinen 10, 20 zugeteilten bzw. zugewiesenen Bediener angezeigt bzw. diese Informationen sind abrufbar. Der Fabrik-Manager werden auf dem tragbaren Kommunikationsgerät 70 die OEE-Kennzahlen aller Kabelverarbeitungsmaschinen 10, 20 ohne Kenntnisse der den Kabelverarbeitungsmaschinen 10, 20 zugewiesenen Bediener angezeigt.

Es ist vorstellbar, dass mehrere Middleware 40 nebeneinander vorhanden sind. Die mehreren Middleware 40 wissen nichts von der Existenz weiterer Middleware 40. Das tragbare Kommunikationsgerät 70 kommuniziert bzw. tauscht Daten aus mit allen vorhandenen Middleware 40.

Es kann bei dem Login der verschiedenen Benutzer 72 des Kabelverarbeitungsmaschinensystems 1 bzw. des Kabelverarbeitungsmaschinensteuerungssystems 5 jeweils eine Authentifizierung (z.B. ein Passwort oder eine Zwei-Wege-Authentifizierung) verlangt werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Kabelverarbeitungsmaschinensteuerungssystem (5) umfassend
- eine Middleware (40), wobei die Middleware (40) zum Datenaustauschen mit Datenvermittlern (16, 26) von mehreren Kabelverarbeitungsmaschinen (10, 20) ausgebildet ist, und
- ein tragbares Kommunikationsgerät (70), wobei das tragbare Kommunikationsgerät (70) zum Datenaustauschen mit der Middleware (40) ausgebildet ist und derart ausgebildet ist, dass, wenn sich ein Benutzer (72) des Kabelverarbeitungsmaschinensteuerungssystems (5) auf dem tragbaren Kommunikationsgerät (70) eingeloggt hat, abhängig von einer durch die Middleware (40) zugewiesenen Rolle des Benutzers (72)
-- dem Benutzer (72) auf dem tragbaren Kommunikationsgerät (70) unterschiedliche Informationen über die der zugewiesenen Rolle des Benutzers (72) zugewiesenen Kabelverarbeitungsmaschinen (10, 20) angezeigt werden
und
-- dem Benutzer (72) auf dem tragbaren Kommunikationsgerät (70) unterschiedliche Aktionsmöglichkeiten zur Steuerung der der zugewiesenen Rolle des Benutzers (72) zugewiesenen Kabelverarbeitungsmaschinen (10, 20) zur Verfügung gestellt werden, wobei die Kabelverarbeitungsmaschinen (10, 20) mittels der zur Verfügung gestellten Aktionsmöglichkeiten über das tragbare Kommunikationsgerät gesteuert werden.

2. Kabelverarbeitungsmaschinensteuerungssystem (5) nach Anspruch 1, wobei
das Kabelverarbeitungsmaschinensteuerungssystem (5) derart ausgebildet ist,
dass dem Benutzer (72) die Rolle abhängig von einer Rollen-Datenbank und/oder einer Rollen-Schichttabelle zugewiesen wird.

3. Kabelverarbeitungsmaschinensteuerungssystem (5) nach Anspruch 1 oder 2, wobei
das Kabelverarbeitungsmaschinensteuerungssystem (5) derart ausgebildet ist,
dass die Kabelverarbeitungsmaschinen (10, 20) der Rolle abhängig von einer Rollen-Datenbank und/oder einer Rollen-Schichttabelle zugewiesen werden.

4. Kabelverarbeitungsmaschinensteuerungssystem (5) nach einem der vorhergehenden Ansprüche, wobei
das tragbare Kommunikationsgerät (70) einen Laptop, ein Smartphone, einen Tabletcomputer, eine Smart-Watch und/oder eine Brille mit einem optischen Display umfasst.

5. Kabelverarbeitungsmaschinensteuerungssystem (5) nach einem der vorhergehenden Ansprüche, wobei
das Kabelverarbeitungsmaschinensteuerungssystem (5) derart ausgebildet ist, dass Positionen von Kabelverarbeitungswerkzeugen für die Kabelverarbeitungsmaschinen (10, 20) und/oder Positionen von Materialien für die Kabelverarbeitungsmaschinen (10, 20) erfasst werden und die Positionen der Kabelverarbeitungswerkzeuge und/oder Materialien auf dem tragbaren Kommunikationsgerät (70) angezeigt werden.

6. Kabelverarbeitungsmaschinensteuerungssystem (5) nach einem der vorhergehenden Ansprüche, wobei
das Kabelverarbeitungsmaschinensteuerungssystem (5) derart ausgebildet ist, dass die Middleware (40) mit einer enterprise-resource-planning-Einheit (50) und/oder einem Fertigungsmanagementsystem (55) Daten austauscht.

7. Kabelverarbeitungsmaschinensystem (1) umfassend
- mehrere Kabelverarbeitungsmaschinen (10, 20), wobei jede Kabelverarbeitungsmaschine (10, 20) einen Datenvermittler (16, 26) aufweist, wobei der jeweilige Datenvermittler (16, 26) mit Sensoren und/oder Aktuatoren (13-15, 23-25) der Kabelverarbeitungsmaschine (10, 20) auf einer Seite und einer Middleware (40) auf einer anderen Seite Daten austauscht, und
- ein Kabelverarbeitungsmaschinensteuerungssystem (5) nach einem der vorhergehenden Ansprüche, wobei das Kabelverarbeitungsmaschinensteuerungssystem (5) Daten mit den Kabelverarbeitungsmaschinen (10, 20) austauscht und/oder die Kabelverarbeitungsmaschinen (10, 20) steuert.

8. Kabelverarbeitungsmaschinensystem (1) nach Anspruch 7, wobei das Kabelverarbeitungsmaschinensystem (1) derart ausgebildet ist, dass die Middleware (40) mit einer enterprise-resource-planning-Einheit (50) und/oder einem Fertigungsmanagementsystem (55) Daten austauscht.

9. Verfahren zum Überwachen und Steuern von Kabelverarbeitungsmaschinen (10, 20), wobei das Verfahren folgende Schritte umfasst:
Einloggen eines Benutzers (72) auf einem tragbaren Kommunikationsgerät (70), wobei das tragbare Kommunikationsgerät (70) zum Datenaustauschen mit einer Middleware (40) ausgebildet ist, wobei die Middleware (40) zum Datenaustauschen mit Datenvermittlern (16, 26) von mehreren Kabelverarbeitungsmaschinen (10, 20) ausgebildet ist;
Bestimmen einer Rolle des Benutzers (72) durch die Middleware (40) und Zuweisen der Rolle an den Benutzer (72);
Zuweisen von Kabelverarbeitungsmaschinen (10, 20) an den Benutzer (72) abhängig von seiner Rolle; und
Anzeigen von Informationen von den dem Benutzer (72) zugeordneten Kabelverarbeitungsmaschinen (10, 20) auf dem tragbaren Kommunikationsgerät (70), wobei die angezeigten Informationen abhängig von der dem Benutzer (72) zugewiesenen Rolle ist,
und
Anzeigen von Aktionsmöglichkeiten zur Steuerung der der zugewiesenen Rolle zugewiesenen Kabelverarbeitungsmaschinen (10, 20) auf dem tragbaren Kommunikationsgerät (70) sowie Steuern der Kabelverarbeitungsmaschinen (10, 20) gemäß der vom Benutzer (72) ausgewählten Aktionsmöglichkeit, wobei die Kabelverarbeitungsmaschinen (10, 20) mittels der zur Verfügung gestellten Aktionsmöglichkeiten über das tragbare Kommunikationsgerät gesteuert werden.

10. Verfahren nach Anspruch 9, wobei
dem Benutzer (72) die Rolle abhängig von einer Rollen-Datenbank und/oder einer Rollen-Schichttabelle zugeordnet wird.

11. Verfahren nach Anspruch 9 oder 10, wobei
die Informationen, die dem Benutzer (72) auf dem tragbaren Kommunikationsgerät (70) angezeigt werden, von der Middleware (40) von den Kabelverarbeitungsmaschinen (10, 20) empfangen werden und von der Middleware (40) an das tragbare Kommunikationsgerät (70) gesandt werden, sofern die entsprechende Kabelverarbeitungsmaschine (10, 20) der Rolle des jeweiligen Benutzers (72) des tragbaren Kommunikationsgeräts (70) zugewiesen ist.

12. Verfahren nach einem der Ansprüche 9-11, wobei die Middleware (40) mit einer enterprise-resource-planning-Einheit (50) und/oder einem Fertigungsmanagementsystem (55) Daten austauscht.

13. Verfahren nach einem der Ansprüche 9-12, wobei Positionen von Kabelverarbeitungswerkzeugen und/oder von Materialien für die Kabelverarbeitungsmaschinen (10, 20) erfasst werden und die Positionen der Kabelverarbeitungswerkzeuge und/oder Materialien auf dem tragbaren Kommunikationsgerät (70) angezeigt werden.

14. Verfahren nach einem der Ansprüche 9-13, wobei die Kabelverarbeitungsmaschinen (10, 20) der Rolle abhängig von einer Rollen-Datenbank und/oder einer Rollen-Schichttabelle zugeordnet werden.

## Claims

1. Cable processing machine control system (5) comprising
- middleware (40), wherein the middleware (40) is designed to exchange data with data brokers (16, 26) of a plurality of cable processing machines (10, 20), and
- a portable communication device (70), wherein the portable communication device (70) is designed to exchange data with the middleware (40) and is designed such that when a user (72) of the cable processing machine control system (5) has logged into the portable communication device (70), depending on a role of the user (72) that is assigned by the middleware (40),
-- different information concerning the cable processing machines (10, 20) assigned to the assigned role of the user (72) is displayed to the user (72) on the portable communication device (70),
and
-- different action options for controlling the cable processing machines (10, 20) assigned to the assigned role of the user (72) are provided to the user (72) on the portable communication device (70), wherein the cable processing machines (10, 20) are controlled by means of the provided action options via the portable communication device.

2. Cable processing machine control system (5) according to claim 1, wherein the cable processing machine control system (5) is designed such that the role is assigned to the user (72) depending on a role database and/or a role shift table.

3. Cable processing machine control system (5) according to either claim 1 or claim 2, wherein
the cable processing machine control system (5) is designed such that the cable processing machines (10, 20) are assigned to the role depending on a role database and/or a role shift table.

4. Cable processing machine control system (5) according to any of the preceding claims, wherein
the portable communication device (70) comprises a laptop, a smartphone, a tablet computer, a smart watch and/or glasses with an optical display.

5. Cable processing machine control system (5) according to any of the preceding claims, wherein
the cable processing machine control system (5) is designed such that positions of cable processing tools for the cable processing machines (10, 20) and/or positions of materials for the cable processing machines (10, 20) are acquired, and the positions of the cable processing tools and/or materials are displayed on the portable communication device (70).

6. Cable processing machine control system (5) according to any of the preceding claims, wherein
the cable processing machine control system (5) is designed such that the middleware (40) exchanges data with an enterprise resource planning unit (50) and/or a production management system (55).

7. Cable processing machine system (1) comprising
- a plurality of cable processing machines (10, 20), wherein each cable processing machine (10, 20) comprises a data broker (16, 26), wherein the relevant data broker (16, 26) exchanges data with sensors and/or actuators (13-15, 23-25) of the cable processing machine (10, 20) and with middleware (40), and
- a cable processing machine control system (5) according to any of the preceding claims, wherein the cable processing machine control system (5) exchanges data with the cable processing machines (10, 20) and/or controls the cable processing machines (10, 20).

8. Cable processing machine system (1) according to claim 7, wherein the cable processing machine system (1) is designed such that the middleware (40) exchanges data with an enterprise resource planning unit (50) and/or a production management system (55).

9. Method for monitoring and controlling cable processing machines (10, 20),
wherein the method comprises the following steps:
a user (72) logging in on a portable communication device (70), wherein the portable communication device (70) is designed to exchange data with middleware (40), wherein the middleware (40) is designed to exchange data with data brokers (16, 26) of a plurality of cable processing machines (10, 20);
determining a role of the user (72) by means of the middleware (40) and assigning the role to the user (72);
assigning cable processing machines (10, 20) to the user (72) depending on their role; and
displaying information regarding the cable processing machines (10, 20) assigned to the user (72) on the portable communication device (70), wherein the displayed information is dependent on the role assigned to the user (72),
and
displaying action options for controlling the cable processing machines (10, 20) assigned to the assigned role on the portable communication device (70) and controlling the cable processing machines (10, 20) according to the action option selected by the user (72), wherein the cable processing machines (10, 20) are controlled by means of the provided action options via the portable communication device.

10. Method according to claim 9, wherein
the role is assigned to the user (72) depending on a role database and/or a role shift table.

11. Method according to either claim 9 or claim 10, wherein
the information displayed to the user (72) on the portable communication device (70) is received by the middleware (40) from the cable processing machines (10, 20) and is transmitted by the middleware (40) to the portable communication device (70), provided that the corresponding cable processing machine (10, 20) is assigned to the role of the relevant user (72) of the portable communication device (70).

12. Method according to any of claims 9-11, wherein
the middleware (40) exchanges data with an enterprise resource planning unit (50) and/or a production management system (55).

13. Method according to any of claims 9-12, wherein
positions of cable processing tools and/or of materials for the cable processing machines (10, 20) are acquired, and the positions of the cable processing tools and/or materials are displayed on the portable communication device (70).

14. Method according to any of claims 9-13, wherein
the cable processing machines (10, 20) are assigned to the role depending on a role database and/or a role shift table.

## Revendications

1. Système de commande de machines de traitement de câbles (5), comprenant
- un intergiciel (40), l'intergiciel (40) étant configuré pour échanger des données avec des courtiers en données (16, 26) de plusieurs machines de traitement de câbles (10, 20), et
- un appareil de communication portable (70), l'appareil de communication portable (70) étant configuré pour échanger des données avec l'intergiciel (40) et étant configuré de telle sorte que lorsqu'un utilisateur (72) du système de commande de machines de traitement de câbles (5) est connecté à l'appareil de communication portable (70), en fonction d'un rôle de l'utilisateur (72) attribué par l'intergiciel (40)
-- différentes informations concernant les machines de traitement de câbles (10, 20) attribuées au rôle attribué de l'utilisateur (72) sont affichées à l'utilisateur (72) sur l'appareil de communication portable (70)
et
-- différentes options d'action pour commander les machines de traitement de câbles (10, 20) attribuées au rôle attribué de l'utilisateur (72) sont mises à la disposition de l'utilisateur (72) sur l'appareil de communication portable (70), les machines de traitement de câbles (10, 20) étant commandées au moyen des options d'action mises à disposition par l'intermédiaire de l'appareil de communication portable.

2. Système de commande de machines de traitement de câbles (5) selon la revendication 1,
le système de commande de machines de traitement de câbles (5) étant configuré de telle sorte que l'utilisateur (72) se voit attribuer le rôle en fonction d'une base de données de rôles et/ou d'une table de changement de rôles.

3. Système de commande de machines de traitement de câbles (5) selon la revendication 1 ou 2,
le système de commande de machines de traitement de câbles (5) étant configuré de telle sorte que les machines de traitement de câbles (10, 20) se voient attribuer le rôle en fonction d'une base de données de rôles et/ou d'une table de changement de rôles.

4. Système de commande de machines de traitement de câbles (5) selon l'une des revendications précédentes,
l'appareil de communication portable (70) comprenant un ordinateur portable, un mobile multifonction, une tablette, une montre intelligente et/ou des lunettes à affichage optique.

5. Système de commande de machines de traitement de câbles (5) selon l'une des revendications précédentes,
le système de commande de machines de traitement de câbles (5) étant configuré de telle sorte que des positions d'outils de traitement de câbles pour les machines de traitement de câbles (10, 20) et/ou des positions de matériaux pour les machines de traitement de câbles (10, 20) sont enregistrées, et les positions des outils de traitement de câbles et/ou des matériaux sont affichées sur l'appareil de communication portable (70).

6. Système de commande de machines de traitement de câbles (5) selon l'une des revendications précédentes,
le système de commande de machines de traitement de câbles (5) étant configuré de telle sorte que l'intergiciel (40) échange des données avec une unité de planification de ressources d'entreprise (50) et/ou un système de gestion de production (55).

7. Système de machines de traitement de câbles (1), comprenant
- plusieurs machines de traitement de câbles (10, 20), chaque machine de traitement de câbles (10, 20) présentant un courtier en données (16, 26), le courtier en données (16, 26) respectif échangeant des données avec des capteurs et/ou des actionneurs (13-15, 23-25) de la machine de traitement de câbles (10, 20) d'un côté et avec un intergiciel (40) de l'autre côté, et
- un système de commande de machines de traitement de câbles (5) selon l'une des revendications précédentes, le système de commande de machines de traitement de câbles (5) échangeant des données avec les machines de traitement de câbles (10, 20) et/ou commandant les machines de traitement de câbles (10, 20).

8. Système de machines de traitement de câbles (1) selon la revendication 7,
le système de machines de traitement de câbles (1) étant configuré de telle sorte que l'intergiciel (40) échange des données avec une unité de planification de ressources d'entreprise (50) et/ou un système de gestion de production (55).

9. Procédé de surveillance et de commande de machines de traitement de câbles (10, 20), le procédé comprenant les étapes suivantes :
connexion d'un utilisateur (72) à un appareil de communication portable (70), l'appareil de communication portable (70) étant configuré pour échanger des données avec un intergiciel (40), l'intergiciel (40) étant configuré pour échanger des données avec des courtiers en données (16, 26) de plusieurs machines de traitement de câbles (10, 20) ;
détermination d'un rôle de l'utilisateur (72) par l'intergiciel (40) et attribution du rôle à l'utilisateur (72) ;
attribution de machines de traitement de câbles (10, 20) à l'utilisateur (72) en fonction de son rôle ; et
affichage, sur l'appareil de communication portable (70), d'informations provenant des machines de traitement de câbles (10, 20) attribuées à l'utilisateur (72), les informations affichées étant dépendantes du rôle attribué à l'utilisateur (72), et
affichage, sur l'appareil de communication portable (70), d'options d'action pour commander les machines de traitement de câbles (10, 20) attribuées au rôle attribué et commande des machines de traitement de câbles (10, 20) selon l'option d'action sélectionnée par l'utilisateur (72), les machines de traitement de câbles (10, 20) étant commandées au moyen des options d'action mises à disposition par l'intermédiaire de l'appareil de communication portable.

10. Procédé selon la revendication 9,
l'utilisateur (72) se voyant attribuer le rôle en fonction d'une base de données de rôles et/ou d'une table de changement de rôles.

11. Procédé selon la revendication 9 ou 10,
les informations affichées à l'utilisateur (72) sur l'appareil de communication portable (70) étant reçues par l'intergiciel (40) depuis les machines de traitement de câbles (10, 20) et envoyées par l'intergiciel (40) à l'appareil de communication portable (70), à condition que la machine de traitement de câbles (10, 20) correspondante soit attribuée au rôle de l'utilisateur (72) respectif de l'appareil de communication portable (70).

12. Procédé selon l'une des revendications 9 à 11,
l'intergiciel (40) échangeant des données avec une unité de planification de ressources d'entreprise (50) et/ou un système de gestion de production (55).

13. Procédé selon l'une des revendications 9 à 12,
des positions d'outils de traitement de câbles et/ou de matériaux pour les machines de traitement de câbles (10, 20) étant enregistrées et les positions des outils de traitement de câbles et/ou des matériaux étant affichées sur l'appareil de communication portable (70).

14. Procédé selon l'une des revendications 9 à 13,
les machines de traitement de câbles (10, 20) se voyant attribuer le rôle en fonction d'une base de données de rôles et/ou d'une table de changement de rôles.
